# EUROPEAN PATENT SPECIFICATION

(11) **EP 1 918 163 B1**
(45) Date of publication and mention of the grant of the patent: **16.12.2009**
(21) Application number: 06123207.0
(22) Date of filing: 30.10.2006
(51) Int. Cl.: B60R 22/02, B60R 22/20, B60R 22/10

(54) **Child safety restraint**
Kindersicherheitsrückhaltevorrichtung
Dispositif de retenue de sécurité pour enfants

(43) Date of publication of application: 07.05.2008
(73) Proprietor: KEY SAFETY SYSTEMS, INC., Sterling Heights, MI 48314 (US)
(72) Inventor: Palliser, Martyn, Carlisle, Cumbria (GB); Bell, John, Carlisle, Cumbria (GB); Smith, George, Carlisle, Cumbria CA2 6AQ (GB)
(74) Representative: Freeman, Jacqueline Carol

(56) References cited:
- EP-A1- 0 952 047
- WO-A-03/106230
- DE-U1- 9 418 273
- FR-A1- 2 369 948
- GB-A- 2 015 321
- US-A- 4 840 404
- US-B1- 6 676 219

## Description

The present invention relates to a vehicle safety restraint, particularly a seat belt restraint which is suitable for restraining child occupants of a vehicle, but which can also be used for restraining adults.

Traditionally a seat belt safety restraint comprises a length of seat belt webbing connected at three points to load bearing parts of a vehicle. The webbing is arranged in use to have a lap section which passes laterally across the hips of the seat occupant, and a torso section which passes diagonally across the torso of the seat occupant from one hip to the opposite shoulder.

Typically one end of the webbing is attached to a sill anchor which is bolted to a load bearing longitudinal chasis member on one side of the seat, usually between the seat and an adjacent door. The lap and torso sections join at a buckle mechanism on the opposite side of the seat and the shoulder end of the webbing is attached to a retractor mounted to a load bearing part of the vehicle, for example a side pillar or sill, or directly to a load bearing seat, optionally via a webbing guide.

The retractor increases comfort for the seat occupant restrained by the belt since it allows the webbing to pay out under relatively low loads to enable limited movement of the restrained seat occupant, for example to reach in-car entertainment controls or storage compartments. However the retractor is biased to keep the webbing relatively taut about the seat occupant and a locking element locks the retractor against webbing payout in the event of high loads indicating that a dangerous situation is detected. For example, an acceleration sensor activates if the vehicle undergoes rapid acceleration or deceleration indicative of a crash.

The belt webbing is fastened to the buckle mechanism by a buckle tongue which is slidably attached to the webbing so that the proportions of webbing making up the lap and torso sections can easily be varied to suit the size and shape of the occupant.

Known seat belt restraints of this sort tend to be unsuitable for vehicle occupants of shorter than average stature, particularly for children, because the shoulder fastening point is fixed to accommodate an average person and is fixed at or above the height of the back of the seat. This is particularly so in rear seat safety restraints.

Thus the torso section of the belt tends to be badly positioned for a child or short person and usually passes too close or adjacent to the child's neck. Because the child does not fit into the adult belt properly the child's shoulder can roll out of the seat belt during the crash effectively making the seat belt a two-point lap belt only. This is dangerous because the lap section alone will then take more force in a crash and will be more likely to inflict injuries than when a torso belt section is combined. In addition there is a danger of the child sliding under the lap section; this is known as submarining. It is well known that children feel uncomfortable with adult seat belt restraints and often position the torso section behind their shoulder to reduce discomfort.

A solution to this problem is exemplified in a product known as "The Generation Belt" which provides an additional strap which is fastened taut in a generally vertical line to the back of the seat. A shoulder support for the seat belt is slidably attached to the vertically extending strap so that its vertical position can be varied.

However, the shoulder support is not retained in the desired position by anything other than friction and under high crash loads it may slide upwardly putting the shoulder support in an unsuitable and dangerous position again. This belt was designed for comfort rather than safety and does not comply with the latest safety regulations of which at least one is ECE 44/03.

GB 2 015 321 discloses a generic seat belt arrangement which is intended primarily as a retrofit to an existing seat belt system in a vehicle.

WO 03/10623 discloses a vehicle safety restraint comprising a vertically extending strap and an adjustable webbing guide for connecting seat belt webbing to the strap. The webbing guide slides along the strap without any means disclosed for positively locking the webbing guide to the strap.

FR 2 369 948 discloses a seat belt system with a vertical strap and the upper end of the torso portion of the seat belt is attached to the vertical strap by passing the seat belt through a selected one of a plurality of loops on the strap rather than to a structural member of the vehicle, for example via a seat belt retractor.

US 6 676 219 discloses a seat belt device to be retrofit on the seats of a school bus wherein the seats have a tubular metal framework. There is no provision for a seat belt retractor in the disclosed seat belt system. A slidable clasp element is adapted to increase and decrease the effective length of the torso portion of a seat belt.

DE 94 18 273 teaches a seat belt system with a vertical strap that is looped around a seat frame, but is not anchored at both ends.

EP 0 952 047 teaches a belt system with a vertical strap without any teaching or suggestion of a means for positively locking a webbing guide to the vertical strap.

US 4 840 404 discloses a vertical strap extending against the back surface of a seat back of a seat with a top end of the strap positively locked to a torso portion of a seat belt in a manner that negates the belt retracting function of a seat belt retractor. Further this seat belt system does not allow a webbing guide to be locked to the strap at any one of a plurality of selectable locations on the vertically extending strap.

According to one aspect of the present invention there is provided a vehicle safety restraint comprising: a vertically extending strap located in a generally vertical position against a front surface of a seat back of a seat, at an upper fixing point the vertically extending strap is attached directly in the region of a top of the seat by a bracket fastened to a load bearing body structure and is held in place by a retractor fixing bolt that also holds in place a seat belt retractor located above the vertically extending strap, at a lower fixing point the bottom end of the vertically extending strap and an end of a lap portion of a seat belt webbing are anchored via a common fixing bracket fixed to the vehicle by a bolt; the seat belt webbing extends from the seat belt retractor located above the vertically extending strap on a side of the vertically extending strap distal from the seat back of the seat and is attached to a tongue adapted to be located in a buckle fixed to a load bearing part of the vehicle; an adjustable webbing guide for connecting the vertically extending strap to seat belt webbing the adjustable webbing guide having a first slot to accommodate the vertically extending strap and a second slot to accommodate a torso portion of the seat belt webbing; characterised by means for positively locking the webbing guide to the vertically extending strap which extends through the first slot in the adjustable webbing guide at any one of a plurality of selectable locations on the vertically extending strap; the torso portion of the seat belt webbing extending unimpeded through the second slot of the seat belt webbing guide; and the vertically extending strap including means to define a lower limit for movement of the adjustable webbing guide on the vertically extending strap.

The vertically extending strap defining a lower limit for the location of the adjustable webbing guide serves as an indicator to the minimum size of occupant that can use the restraint. If the adjuster is moved to the lowest position and the occupant's shoulder is below this level then the occupant is too small for the restraint and should use an appropriate child restraint.

According to a preferred embodiment of the invention the vertically extending strap comprises a plurality of holes spaced along its length, and the adjustable webbing guide comprises a retractable projection sized to be insertable through any one of the holes to lock the adjustable webbing guide to the vertically extending strap. Preferably the retractable projection is retractable by means of one or more pushable buttons, and is biased to an unretracted position, preferably by a leaf spring.

According to an alternative embodiment of the invention the adjustable webbing guide comprises a web clamp arranged to positively engage the vertically extending strap to lock the adjustable webbing guide at said one of the selectable locations. Preferably the web clamp comprises a jaw having a toothed surface and a frame, the jaw being pivotally mounted and spring loaded so that the toothed surface is normally tensioned towards the frame thereby providing means for clamping the vertically extending strap. Advantageously the web clamp is releasable from clamping the vertically extending strap by means of a push button portion connected to the jaw.

For a better understanding of the present invention and to show how the same may be carried into effect, reference will now be made, by way of example, to the accompanying drawings, in which:
Figure 1 is a schematic view of a small child restrained in a vehicle seat by a traditional seat belt;
Figure 2 is a schematic view of a small child restrained in a vehicle seat by a seat belt according to the present invention;
Figure 3 is a schematic view of a larger child restrained in a vehicle seat by a seat belt according to the present invention;
Figure 4 is a schematic view of an adult restrained in a vehicle seat by a seat belt according to the present invention;
Figure 5 is a schematic view showing the seat belt of Figures 2, 3 and 4 in more detail;
Figure 6 is a perspective view of part of the seat belt of Figures 2, 3, 4 and 5;
Figure 7 is a front view of the part of the seat belt of Figure 6;
Figure 8 is a side view of the seat belt of Figures 2 to 7 attached to a seat;
Figure 9 is a perspective view illustrating more detail of one embodiment of an adjustable webbing guide forming part of the seat belt of Figures 2 to 8;
Figure 10 is a cross-sectional view of the adjustable webbing guide of Figure 9 in an unlocked position;
Figure 11 is a cross-sectional view of the adjustable webbing guide of Figure 9 in a released position;
Figure 12 is a perspective view of a second embodiment of an adjustable webbing guide of the seat belt of Figures 2 to 8;
Figure 13 is an exploded perspective view of the adjustable webbing guide of the seat belt of Figure 12;
Figure 14 is a cross-sectional view of the adjustable webbing guide shown in Figures 12 and 13 in a released position;
Figure 15 is a cross-sectional view of the adjustable webbing guide of Figures 12 and 13 in a locked position;
Figure 16 is a side view of the adjustable webbing guide of Figures 12 and 13 in the locked position.

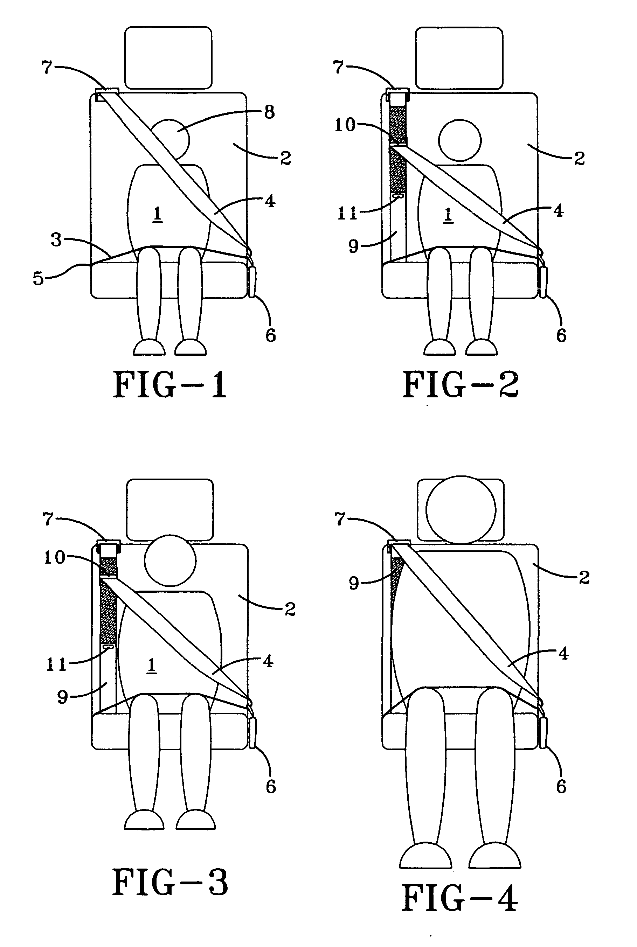

Figure 1 illustrates a traditional seat belt when used for a child 1 sitting in a vehicle seat 2. The seat belt comprises a lap portion 3 and a torso portion 4. The seat belt is attached to load bearing parts of the vehicle at three points: a lower fixing point 5 at one side of the seat, a buckle point 6 at the opposite side of the seat and an upper fixing point 7 at the top of the seat back. As can be seen in Figure 1, a traditional seat belt places the torso section 4 in an unsuitable position for a child 1, since it would pass across the child's head 8 or neck.

In Figure 2 a seat belt safety restraint according to the present invention is illustrated. The inventive seat belt comprises a vertically extending strap 9 attached to the seat 2 at the upper fixing point 7 and also at a lower point on the seat back, so that it lies in a generally vertical orientation against the backrest of the seat 2. An adjustable webbing guide 10 connects the torso section 4 of the seat belt to the vertically extending strap 9 so as to lower the effective shoulder attachment point to a position which ensures that the torso section 4 of the seat belt is more correctly and safely positioned to extend from the hip to the opposite shoulder of a child occupant 1.

A stop 11, which may be in the form of a raised plastics button on the vertically extending strap 9, prevents further movement of the adjustable guide 10 below this point on the strap 9. The stop 11 will normally be positioned at the point which meets safety regulations or legal requirements for allowable occupant height.

In Figure 3 the inventive seat belt arrangement is shown with a slightly larger child 1 occupying the seat 2. The adjustable webbing guide 10 is mounted at a higher point on the vertically extending strap 9, again ensuring that the torso section 4 of the seat belt suitably passes from the hip of the occupant to the opposite shoulder as illustrated.

In Figure 4 an adult occupies the seat 2 and in this case the adjustable webbing guide 10 is either removed altogether from the vertically extending strap 9 or is positioned at the top of the vertically extending strap 9 so that the seat belt can be used as normal.

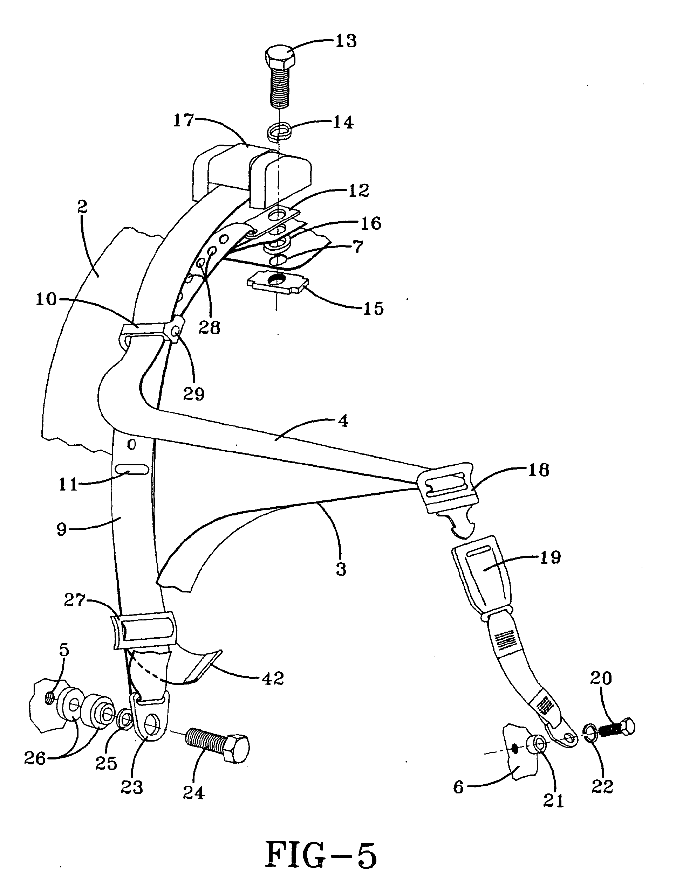

Figure 5 shows the inventive seat belt in more detail in an exploded view. At the upper fixing point 7, the vertically extending strap 9 is attached directly in the region of the top of the seat 2 by a bracket 12 fastened to a load bearing body structure such as a parcel shelf or a load bearing part of the seat 2 and is held in place by a retractor fixing bolt 13 passing through a washer 14 and into a tapped anchor plate 15 via a spacer 16. The bolt 13 also holds in place a seat belt retractor 17. One end of the torso section 4 of the seat belt webbing is attached to the retractor 17. The torso section 4 passes through the adjustable webbing guide 10 and is attached to a buckle tongue 18 which fastens into buckle 19. The buckle 19 is bolted, with bolt 20, optional spacer 21 and washer 22 to an anchor point 6 which may be in the vehicle body floor or another load bearing point such as a pillar. The other end of the lap portion 3 of the seat belt is attached to the lower fixing point 5 which may be an anchor point in the door sill or the vehicle body. Lower fixing point 5 holds not only the other end of the lap portion 3 of the seat belt but also the bottom end of the vertically extending strap 9 via a common fixing bracket 23 held in the anchor point 5 by bolt 24 using a wave washer 25 and two optional spacers 26. The vertically extending strap 9 can be made taught between fixing points 5 and 7 by use of an adjuster 27 and the loose end 42 of the vertically extending strap 9 would typically be tucked under the seat cushion.

The adjustable webbing guide 10 is located on the vertically extending strap 9 by engagement of a protrusion on the underside of the webbing guide 10 with an appropriate hole 28 in the vertically extending strap 9. The protrusion can be disengaged from one end of the hole 28 via a push button 29 on one or both sides of the adjustable webbing guide 10. The lower limit of the position of the webbing guide 10 is determined by the stop 11.

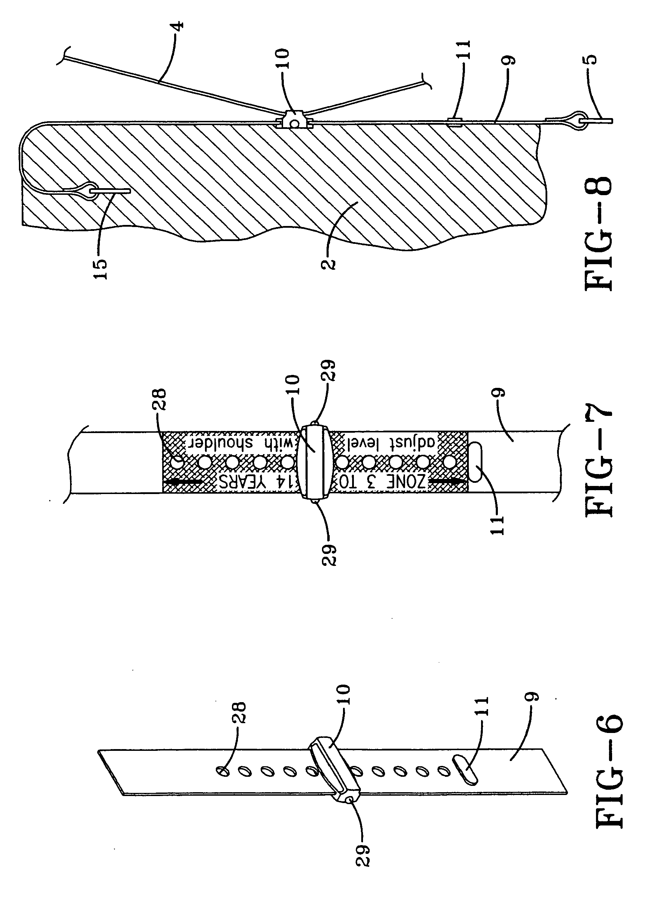

Figure 6 shows a section of the vertically extending strap 9 in more detail without the seat belt webbing being shown. Like parts are numbered accordingly. Thus the adjustable webbing guide 10 is engageable with any one of the holes 28 via a projection (not shown) which is operated by push button(s) 29. Stop 11 limits the downward movement of the adjustable webbing guide 10.

Figure 7 illustrates a preferred embodiment of the vertically extending strap 9 in which zones are clearly marked to define approximate regions of the vertically extending strap 9 in which the adjustable webbing guide 10 must be located to ensure the correct shoulder height for different age groups. In Figure 7 it can be seen that the adjustable webbing guide 10 is positioned in "ZONE 3" which is clearly indicated as a region which would be suitable for age groups up to fourteen. Other indicia or instructions can be incorporated into the vertically extending strap 9. For example in Figure 7 the instruction "adjust level in-line with shoulder" is included.

In Figure 8 a side view of part of the seat belt arrangement of the invention is shown. Again like parts are denoted by like reference numbers. The vertically extending strap 9 is anchored at its upper end in the seat back 2 via anchor plate 15 and at its lower end by the anchor point 5 to a load bearing part of a vehicle. The understrap 9 passes through a rear slot in the webbing guide 10 and the torso section 4 of the seat belt passes through a front slot.

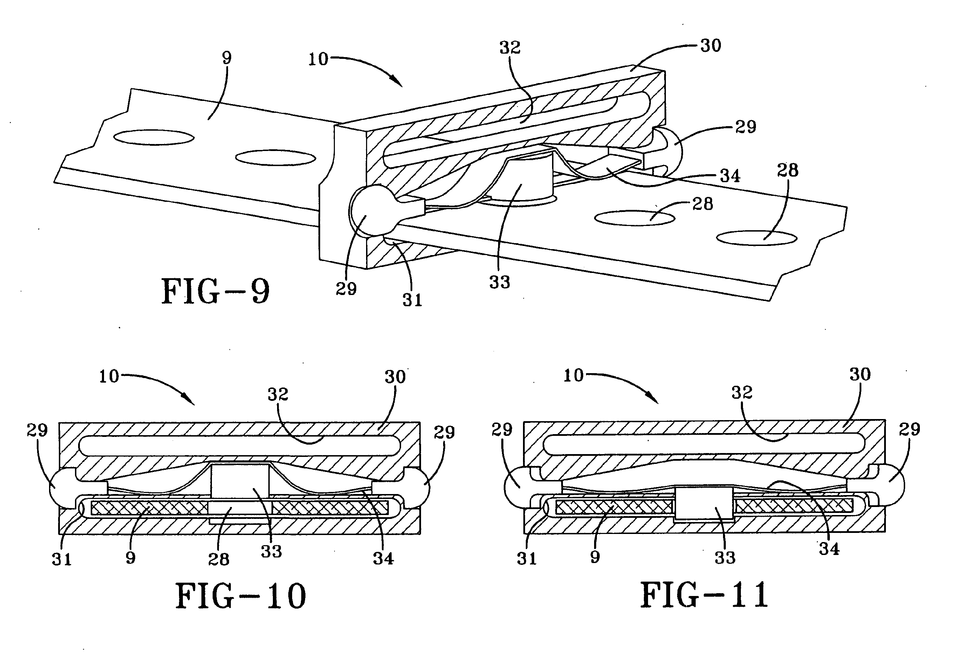

Figures 9, 10 and 11 illustrate one embodiment in which the webbing guide 10 comprises a housing 30 with two slots, a first slot 31 through which the vertically extending strap 9 passes, and a second slot 32 through which the torso section 4 of the seat belt webbing passes. The adjustable webbing guide 10 is held in position relative to the vertically extending strap 9 by a retractable projection 33 which protrudes into and preferably through one of the holes 28 in the vertically extending strap 9. The projection 33 is attached to a leaf spring 34 which urges the projection 33 to normally protrude through the hole 28. One of two push buttons 29 is arranged on each end of the leaf spring 34. When both push buttons 29 are pressed towards each other the projection 33 rises out of the hole 28 clear of the vertically extending strap 9, enabling the adjustable webbing guide 10 to be moved along the length of the vertically extending strap 9. This is shown in Figure 10. When the push buttons 29 are released the projection 33 is pushed by the force of the spring 34 towards the vertically extending strap 9. If the projection 33 is aligned with a hole 28 then the projection 33 will protrude through the hole 28, thereby locking the adjustable webbing guide 10 in position. This is shown in Figure 11.

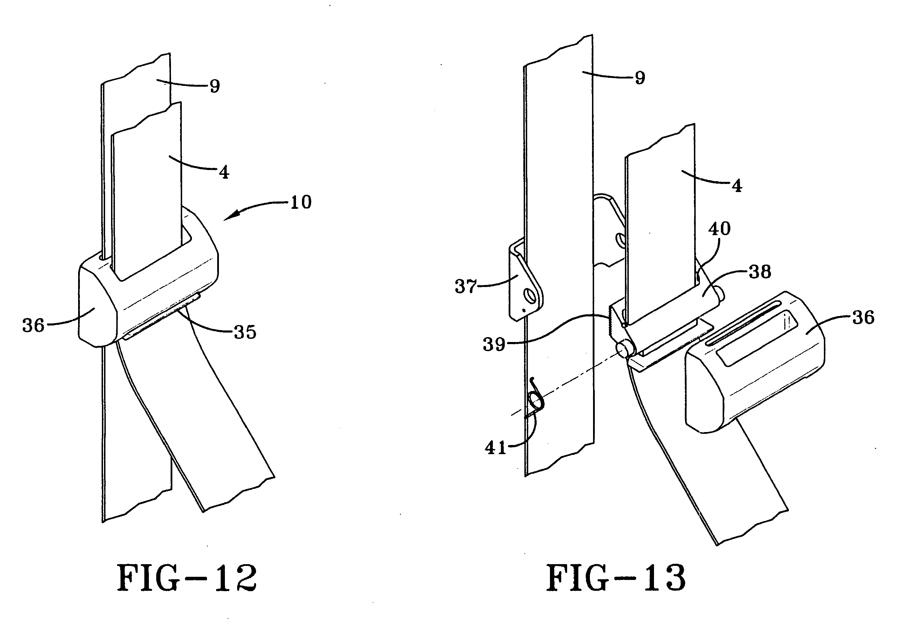

In Figures 12 through 16 a further embodiment of the adjustable webbing guide 10 of the seat belt is shown which uses web clamping to hold the adjustable webbing guide 10 in position on the vertically extending strap 9. The principal of web clamping is known in the art of seat belt retractor technology in combination with retractors.

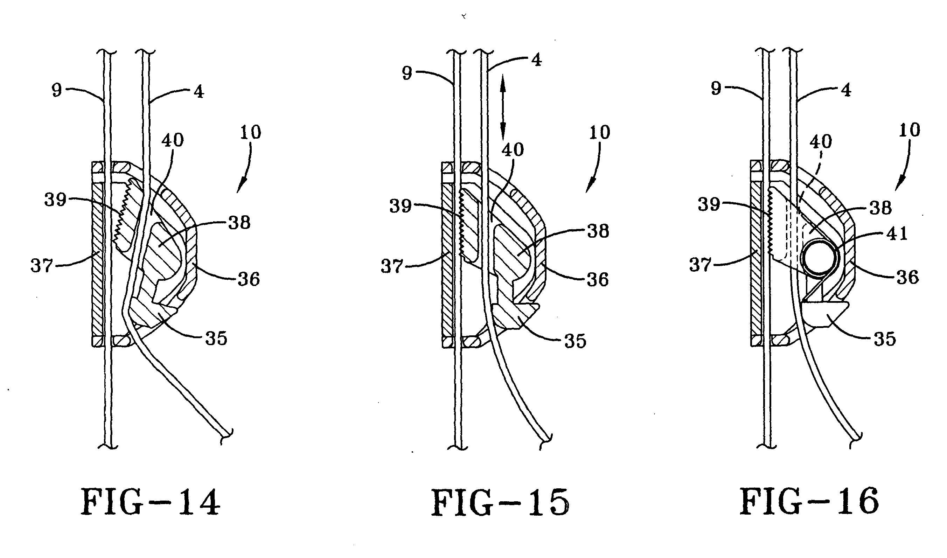

The adjustable webbing guide 10 comprises a cover 36, a frame 37 and a jaw 38. The jaw 38 includes a push button portion 35, a toothed surface 39 and a webbing slot 40 through which the torso section 4 of the seat belt passes. The jaw 38 is pivotally mounted to the frame 37 and spring loaded with a torsion spring 41 (Figure 16) so that the toothed surface 39 is normally tensioned towards the frame 37. The vertically extending strap 9 is located between the frame 37 and the toothed surface 39 of the jaw 38 so that the adjustable webbing guide 10 is normally held in position relative to the vertically extending strap 9 by the clamping force between the jaw 38 and the frame 37 on the vertically extending strap 9.

In Figure 14 the adjustable webbing guide 10 of Figures 12 and 13 is shown from the side in a cross-section view, with pressure being applied to the push button portion 35 of the jaw 38, such that the jaw 38 is pivoted away from the frame 37 toward the cover 36 and there is no clamping force applied to the vertically extending strap 9, allowing the adjustable webbing guide 10 to move longitudinally with respect to the vertically extending strap 9.

Figures 15 and 16 show the adjustable webbing guide 10 of Figures 12 and 13 when no pressure is applied to the push button portion 35. The torsion spring 41 (Figure 16) provides the clamping force between the toothed surface 39 of the jaw 38 and the frame 37 so that the adjustable webbing guide 10 biased toward the vertically extending strap 9 and the jaw 38 is pivoted toward the frame 37 to clamp the vertically extending strap 9 and secure the adjustable webbing guide 10 in position.

Typically this invention provides a child safety restraint for the three to fourteen year old age range. It can be used with or without a booster cushion or booster seat and would therefore be particularly suitable for minibuses so that they can still be used by adult passengers.

The way in which the adjustable webbing guide 10 is locked onto the vertically extending strap 9 could take other forms, such as for example a toggle clamp in place of the holes punched through the webbing as illustrated. A toggle clamp is an over centre linkage mechanism. When the mechanism is moved from its unlocked position there is a lot of movement but low force. However, when the mechanism nears the locked or clamped position, and the link is nearing "top dead centre", for the same amount of lever movement there is significantly less movement of the clamp and the load is much greater.

## Claims

1. A vehicle safety restraint comprising:
a vertically extending strap (9) located in a generally vertical position against a front surface of a seat back of a seat (2), at an upper fixing point (7) the vertically extending strap (9) is attached directly in the region of a top of the seat (2) by a bracket (12) fastened to a load bearing body structure and is held in place by a retractor fixing bolt (13) that also holds in place a seat belt retractor (17) located above the vertically extending strap, at a lower fixing point (5) the bottom end of the vertically extending strap (9) and an end of a lap portion (3) of a seat belt webbing (4) are anchored via a common fixing bracket (23) fixed to the vehicle by a bolt (24);
the seat belt webbing (4) extends from the seat belt retractor (17) located above the vertically extending strap on a side of the vertically extending strap (9) distal from the seat back of the seat (2) and is attached to a tongue (18) adapted to be located in a buckle (19) fixed to a load bearing part of the vehicle;
an adjustable webbing guide (10) for connecting the vertically extending strap (9) to seat belt webbing (4) the adjustable webbing guide (10) having a first slot (13) to accommodate the vertically extending strap (9) and a second slot (32) to accommodate a torso portion of the seat belt webbing (4);
**characterised by** means for positively locking the webbing guide (10) to the vertically extending strap (9) which extends through the first slot (31) in the adjustable webbing guide at any one of a plurality of selectable locations on the vertically extending strap (9); the torso portion of the seat belt webbing extending unimpeded through the second slot (32) of the seat belt webbing guide; and the vertically extending strap (9) including means to define a lower limit for movement of the adjustable webbing guide (10) on the vertically extending strap (9).

2. A vehicle safety restraint according to claim 1 wherein the lower limit defining means is arranged so that the lower limit of the adjustable webbing guide (10) corresponds to a minimum legal shoulder height for a user of the safety restraint.

3. A vehicle safety restraint according to either of claims 1 or 2 wherein the lower limit defining means comprises a stop (11) comprising a raised portion located on the vertically extending strap (9).

4. A vehicle safety restraint according to claim 3 wherein the raised portion has a thickness which is greater than the width of the first slot (31) of the adjustable webbing guide (10) to prevent movement of the adjustable webbing guide (10) on the vertically extending strap (9) beyond the stop (11).

5. A vehicle safety restraint according to any one of claims 1 to 4 wherein the vertically extending strap (9) includes markings defining regions on the vertically extending strap (9) in which the adjustable webbing guide (10) should be located indicative of the correct positioning of the adjustable webbing guide (10) in dependence upon the age or height of a user of the safety restraint.

6. A vehicle safety restraint according to any one of claims 1 to 5 wherein the vertically extending strap (9) comprises a plurality of holes (28) spaced along its length, and the adjustable webbing guide (10) comprises a retractable projection (33) sized to be insertable through any one of the holes (28) to lock the adjustable webbing guide (10) to the vertically extending strap (9).

7. A vehicle safety restraint according to claim 6 wherein the retractable projection (33) is retractable by means of one or more pushable buttons (29).

8. A vehicle safety restraint according to claim 7 wherein the retractable projection (33) is biased to an unretracted position.

9. A vehicle safety restraint according to claim 8 wherein the retractable projection (33) is biased to an unretracted position by a leaf spring (34).

10. A vehicle safety restraint according to any one of claims 1 to 5 wherein the adjustable webbing guide (10) comprises a web clamp adapted to positively engage the vertically extending strap (9) to lock the adjustable webbing guide (10) at said one of the selectable locations.

11. A vehicle safety restraint according to claim 10 wherein the web clamp comprises a jaw (38), and a frame (37), wherein the jaw (38) is pivotally mounted and spring loaded so that the jaw (38) is normally tensioned towards the frame (37) exerting a clamping force on the vertically extending strap (9) between the jaw (38) and the frame (37).

12. A vehicle safety restraint according to claim 11 wherein the jaw (38) is pivotable away from the frame (37) by means of a push button portion (35) connected to the jaw (38), to release the clamping force on the vertically extending strap (9).

13. A vehicle safety restraint according to either of claims 11 or 12 wherein the jaw (38) comprises a toothed surface (39) facing toward the vertically extending strap (9).

## Patentansprüche

1. Fahrzeugsicherheitsrückhaltevorrichtung, die aufweist:
einen sich vertikal erstreckenden Riemen (9), der in einer im Allgemeinen vertikalen Position gegen eine Vorderfläche einer Rückenlehne eines Sitzes (2) an einer oberen Befestigungsstelle (7) angeordnet ist, wobei der sich vertikal erstreckende Riemen (9) direkt im Bereich eines Oberteils des Sitzes (2) mittels einer Halterung (12) befestigt ist, die an einer tragenden Karosseriestruktur befestigt ist, und mittels einer Gurtaufrollerbefestigungsschraube (13) an Ort und Stelle gehalten wird, die ebenfalls einen Sicherheitsgurtaufroller (17), der sich oberhalb des sich vertikal erstreckenden Riemen befindet, an Ort und Stelle hält, wobei das untere Ende des sich vertikal erstreckenden Riemens (9) und ein Ende eines Beckenabschnittes (3) eines Sicherheitsgurtbandes (4) mittels einer gemeinsamen Befestigungshalterung (23) an einer unteren Befestigungsstelle (5) verankert sind, die am Fahrzeug mittels einer Schraube (24) befestigt ist;
wobei sich das Sicherheitsgurtband (4) vom Sicherheitsgurtaufroller (17) erstreckt, der oberhalb des sich vertikal erstreckenden Riemens auf einer Seite des sich vertikal erstreckenden Riemens (9) distal von der Rückenlehne des Sitzes (2) angeordnet ist, und an einer Steckzunge (18) befestigt ist, die so ausgebildet ist, dass sie in einem Gurtschloss (19) angeordnet wird, das an einem tragenden Teil des Fahrzeuges befestigt ist;
eine verstellbare Bandführung (10) für das Verbinden des sich vertikal erstreckenden Riemens (9) mit dem Sicherheitsgurtband (4), wobei die verstellbare Bandführung (10) einen ersten Schlitz (31), um den sich vertikal erstreckenden Riemen (9) aufzunehmen, und einen zweiten Schlitz (32) aufweist, um einen Torsoabschnitt des Sicherheitsgurtbandes (4) aufzunehmen;
**gekennzeichnet durch** eine Einrichtung für das zwangläufige Verriegeln der Bandführung (10) am sich vertikal erstreckenden Riemen (9), der sich **durch** den ersten Schlitz (31) in der verstellbaren Bandführung an irgendeiner einer Vielzahl von wählbaren Stellen auf dem sich vertikal erstreckenden Riemen (9) erstreckt; **dadurch**, dass sich der Torsoabschnitt des Sicherheitsgurtbandes unbehindert **durch** den zweiten Schlitz (32) der Sicherheitsgurtbandführung erstreckt; und **dadurch**, dass der sich vertikal erstreckende Riemen (9) eine Einrichtung umfasst, um eine untere Grenze für die Bewegung der verstellbaren Bandführung (10) auf dem sich vertikal erstreckenden Riemen (9) zu definieren.

2. Fahrzeugsicherheitsrückhaltevorrichtung nach Anspruch 1, bei der die Einrichtung für das Definieren der unteren Grenze so angeordnet ist, dass die untere Grenze der verstellbaren Bandführung (10) einer gesetzlich vorgeschriebenen Mindestschulterhöhe für einen Benutzer der Sicherheitsrückhaltevorrichtung entspricht.

3. Fahrzeugsicherheitsrückhaltevorrichtung nach entweder Anspruch 1 oder 2, bei der die Einrichtung für das Definieren der unteren Grenze einen Anschlag (11) aufweist, der einen erhabenen Abschnitt aufweist, der auf dem sich vertikal erstreckenden Riemen (9) angeordnet ist.

4. Fahrzeugsicherheitsrückhaltevorrichtung nach Anspruch 3, bei der der erhabene Abschnitt eine Dicke aufweist, die größer ist als die Breite des ersten Schlitzes (31) der verstellbaren Bandführung (10), um eine Bewegung der verstellbaren Bandführung (10) auf dem sich vertikal erstreckenden Riemen (9) über den Anschlag (11) hinaus zu verhindern.

5. Fahrzeugsicherheitsrückhaltevorrichtung nach einem der Ansprüche 1 bis 4, bei der der sich vertikal erstreckende Riemen (9) Markierungen umfasst, die Bereiche auf dem sich vertikalen erstreckenden Riemen (9) definieren, in denen die verstellbare Bandführung (10) angeordnet werden sollte, die die richtige Positionierung der verstellbaren Bandführung (10) in Abhängigkeit vom Alter oder der Größe eines Benutzers der Sicherheitsrückhaltevorrichtung anzeigen.

6. Fahrzeugsicherheitsrückhaltevorrichtung nach einem der Ansprüche 1 bis 5, bei der der sich vertikal erstreckende Riemen (9) eine Vielzahl von Löchern (28) aufweist, die entlang seiner Länge beabstandet sind, und wobei die verstellbare Bandführung (10) einen zurückziehbaren Vorsprung (33) aufweist, der so bemessen ist, dass er durch eines der Löcher (28) eingesetzt werden kann, um die verstellbare Bandführung (10) auf dem sich vertikal erstreckenden Riemen (9) zu verriegeln.

7. Fahrzeugsicherheitsrückhaltevorrichtung nach Anspruch 6, bei der der zurückziehbare Vorsprung (33) mittels eines oder mehrerer Druckknöpfe (29) zurückziehbar ist.

8. Fahrzeugsicherheitsrückhaltevorrichtung nach Anspruch 7, bei der der zurückziehbare Vorsprung (33) in eine nicht zurückgezogene Position vorgespannt wird.

9. Fahrzeugsicherheitsrückhaltevorrichtung nach Anspruch 8, bei der der zurückziehbare Vorsprung (33) in eine nicht zurückgezogene Position mittels einer Blattfeder (34) vorgespannt wird.

10. Fahrzeugsicherheitsrückhaltevorrichtung nach einem der Ansprüche 1 bis 5, bei der die verstellbaren Bandführung (10) eine Bandklemme aufweist, die ausgebildet ist, um zwangsläufig mit dem sich vertikal erstreckenden Riemen (9) in Eingriff zu kommen, um die verstellbare Bandführung (10) an einer der wählbaren Stellen zu verriegeln.

11. Fahrzeugsicherheitsrückhaltevorrichtung nach Anspruch 10, bei der die Bandklemme eine Klemmbacke (38) und einen Rahmen (37) aufweist, wobei die Klemmbacke (38) drehbar montiert und abgefedert ist, so dass die Klemmbacke (38) normalerweise in Richtung des Rahmens (37) gespannt wird, wobei eine Klemmkraft auf den sich vertikal erstreckenden Riemen (9) zwischen der Klemmbacke (38) und dem Rahmen (37) ausgeübt wird.

12. Fahrzeugsicherheitsrückhaltevorrichtung nach Anspruch 11, bei der die Klemmbacke (38) mittels eines mit der Klemmbacke (38) verbundenen Druckknopfabschnittes (35) vom Rahmen (37) weg drehbar ist, um die Klemmkraft auf den sich vertikal erstreckenden Riemen (9) zu lockern.

13. Fahrzeugsicherheitsrückhaltevorrichtung nach entweder Anspruch 11 oder 12, bei der die Klemmbacke (38) eine verzahnte Oberfläche (39) aufweist, die in Richtung des sich vertikal erstreckenden Riemens (9) liegt.

## Revendications

1. Dispositif de retenue de sécurité pour un véhicule, comprenant :
une courroie à extension verticale (9), agencée dans une position généralement verticale contre une surface avant d'un dossier d'un siège (2), la courroie à extension verticale (9) étant fixée au niveau d'un point de fixation supérieur (7) directement dans la région d'une partie supérieure du siège (2) par une console (12) fixée sur une structure de corps de support de la charge, et étant retenue dans sa position par un boulon de fixation de l'enrouleur (13), maintenant aussi dans sa position un enrouleur de la ceinture de sécurité (17) agencé au-dessus de la courroie à extension verticale, l'extrémité inférieure de la courroie à extension verticale (9) et une extrémité d'une partie de protection abdominale (3) d'une sangle de ceinture de sécurité (4) étant ancrées au niveau d'un point de fixation inférieur (5) par l'intermédiaire d'une console de fixation commune (23) fixée sur le véhicule par un boulon (24) ;
la sangle de la ceinture de sécurité (4) s'étendant de l'enrouleur de la ceinture de sécurité (17), agencé au-dessus de la courroie à extension verticale sur un côté de la courroie à extension verticale (9), distal par rapport au dossier du siège (2), et étant fixée sur une languette (18) adaptée pour être logée dans une boucle (19) fixée sur une partie de support de la charge du véhicule ;
un guide ajustable de la sangle (10) pour connecter la courroie à extension verticale (9) à la sangle de la ceinture de sécurité (4), le guide ajustable de la sangle (10) comportant une première fente (31) pour recevoir la courroie à extension verticale (9), et une deuxième fente (32) pour recevoir une partie torse de la sangle de la ceinture de sécurité (4) ;
**caractérisé par** un moyen destiné à assurer un verrouillage positif du guide de la sangle (10) sur la courroie à extension verticale (9), s'étendant à travers la première fente (31), dans le guide ajustable de la sangle au niveau d'un quelconque emplacement de plusieurs emplacements sélectionnables sur la courroie à extension verticale (9) ; la partie torse de la sangle de la ceinture de sécurité s'étendant librement à travers la deuxième fente (32) du guide de la sangle de la ceinture de sécurité : et la courroie à extension verticale (9) englobant un moyen pour définir une limite inférieure du déplacement du guide ajustable de la sangle (10) sur la courroie à extension verticale (9).

2. Dispositif de retenue de sécurité pour un véhicule selon la revendication 1, dans lequel le moyen définissant la limite inférieure est agencé de sorte que la limite inférieure du guide ajustable de la sangle (10) correspond à une hauteur d'épaule légale minimale pour un utilisateur du dispositif de retenue de sécurité.

3. Dispositif de retenue de sécurité pour un véhicule selon les revendications 1 ou 2, dans lequel le moyen définissant la limite inférieure comprend un arrêt (11), comprenant une partie surélevée agencés sur la courroie à extension verticale (9),

4. Dispositif de retenue de sécurité pour un véhicule selon la revendication 3, dans lequel la partie surélevée a une épaisseur supérieure à la largeur de la première fente (31) du guide ajustable de la sangle (10), pour empêcher le déplacement du guide ajustable de la sangle (10) au-delà de l'arrêt (11) sur la courroie à extension verticale (9).

5. Dispositif de retenue de sécurité pour un véhicule selon l'une quelconque des revendications 1 à 4, dans lequel la courroie à extension verticale (9) englobe des repères définissant des régions sur la courroie à extension verticale (9), dans lesquelles le guide ajustable de la sangle (10) devrait être agencé de sorte à indiquer le positionnement correct du guide ajustable de la sangle (10) en fonction de l'âge ou de la taille d'un utilisateur du dispositif de retenue de sécurité.

6. Dispositif de retenue de sécurité pour un véhicule selon l'une quelconque des revendications 1 à 5. dans lequel la courroie à extension verticale (9) comprend plusieurs trous (28) espacés le long de sa longueur, le guide ajustable de la sangle (10) comprenant une saillie rétractable (33) dimensionnée de sorte à pouvoir être insérée à travers un quelconque des trous (28) pour verrouiller le guide ajustable de la sangle (10) sur la courroie à extension verticale (9).

7. Dispositif de retenue de sécurité pour un véhicule selon la revendication 6, dans lequel la saillie rétractable (33) peut être rétractée par l'intermédiaire d'un ou de plusieurs boutons poussoirs (29).

8. Dispositif de retenue de sécurité pour un véhicule selon la revendication 7, dans lequel la saillie rétractable (33) est poussée vers une position non rétractée.

9. Dispositif de retenue de sécurité pour un véhicule selon la revendication 8, dans lequel la saillie rétractable (33) est poussée vers une position non rétractée par un ressort à lames (34).

10. Dispositif de retenue de sécurité pour un véhicule selon l'une quelconque des revendications 1 à 5, dans lequel le guide ajustable de la sangle (10) comprend une bride de serrage de la sangle, adaptée pour s'engager de manière positive dans la courroie à extension verticale (9), pour verrouiller le guide ajustable de la sangle (10) au niveau dudit un emplacement des emplacements sélectionnables.

11. Dispositif de retenue de sécurité pour un véhicule selon la revendication 10, dans lequel la bride de serrage de la sangle comprend une mâchoire (38) et un cadre (37), la mâchoire (38) étant montée de manière pivotante et chargée par ressort, de sorte que la mâchoire (38) est normalement tendue vers le cadre (37), exerçant une force de serrage sur la courroie à extension verticale (9) entre la mâchoire (38) et le cadre (37).

12. Dispositif de retenue de sécurité pour un véhicule selon la revendication 11, dans lequel la mâchoire (38) peut être pivotée à l'écart du cadre (37) par l'intermédiaire d'une partie à bouton poussoir (35) connectée à la mâchoire (38), pour relâcher la force de serrage exercée sur la courroie à extension verticale (9).

13. Dispositif de retenue de sécurité pour un véhicule selon les revendications 11 où 12, dans lequel la mâchoire (38) comprend une surface dentée (39) orientée vers la courroie à extension verticale (9).
